(19) **Europäisches Patentamt / European Patent Office / Office européen des brevets**

(11) **EP 4 535 238 A2**

(12) # EUROPEAN PATENT APPLICATION

(43) Date of publication:
09.04.2025 Bulletin 2025/15

(21) Application number: 25152215.7

(22) Date of filing: 16.04.2022

(51) International Patent Classification (IPC):
*G06N 3/065* (2023.01)

(52) Cooperative Patent Classification (CPC):
G06N 3/049; G06N 3/065

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 16.04.2021 US 202163175570 P

(62) Document number(s) of the earlier application(s) in accordance with Art. 76 EPC:
22724651.9 / 4 323 923

(71) Applicant: Innatera Nanosystems B.V.
2289 EX Rijswijk (NL)

(72) Inventors:
• ZJAJO, Amir
  2289 EX Rijswijk (NL)
• KUMAR, Sumeet Susheel
  2289 EX Rijswijk (NL)

(74) Representative: Hoyng Rokh Monegier B.V.
Rembrandt Tower, 30th Floor
Amstelplein 1
1096 HA Amsterdam (NL)

Remarks:
This application was filed on 16-01-2025 as a divisional application to the application mentioned under INID code 62.

(54) **HIERARCHICAL RECONFIGURABLE MULTI-SEGMENT SPIKING NEURAL NETWORK**

(57) The present invention discloses a neurosynaptic array comprising a plurality of spiking neurons, and a plurality of synaptic elements interconnecting the spiking neurons to form the network at least partly implemented in hardware. The neurosynaptic array comprises weight blocks and output blocks, each weight block comprising one or more of the synaptic elements, and each output block comprising one or more of the neurons and a neuron switching circuit. Each output block is electrically connectable to a subset of weight blocks via the neuron switching circuit. The neuron switching circuit is configured to selectively electrically connect at least one synaptic element comprised within the subset of weight blocks to at least one neuron comprised within the respective output block, to obtain a partitioning of the neurosynaptic array into sets of neurons electrically connected to selected synaptic elements.

FIG.2

EP 4 535 238 A2

(Cont. next page)

FIG.2D

**Description**

TECHNICAL FIELD

The present invention relates to automatic signal recognition techniques, and more particularly, to a system and method for a hierarchical, reconfigurable multi-segment network of spiking neurons.

BACKGROUND

Deep neural networks (DNNs) form the basis for a large number of machine learning applications; starting with speech and image recognition, the number of applications that utilize DNNs has increased exponentially. Initially, hardware (deep-network) accelerators have been implemented on standard synchronous digital logic. The high level of parallelism of neural networks is not replicated in the (typically) serial and time-multiplexed processing in digital systems; conversely, computational primitives of hardware DNN emulator realized as analog computing nodes, where memory and processing elements are co-localized, offer significant improvements in terms of speed, size, and power consumption.

In biological neural network models each individual neuron communicates asynchronously and through sparse events, or spikes. In such event-based spiking neural network (SNN) only neurons who change the state generate spikes and may trigger signal processing in subsequent layers, consequently, saving computational resources. In particular, SNNs incorporate asynchronous distributed architectures that process sparse binary time series by means of local spike-driven computations, local or global feedback, and online learning. In analogy with biological neural processing systems, mixed-signal based SNN processors preserve two of their fundamental characteristics: the explicit representation of time and the explicit use of space, instantiating dedicated physical circuits for each neuron/synapse element.

In essence, such SNN implementations adopt a hybrid analog-digital signal representation, i.e. the trains of pulses/spikes transmit analog information in the timing of the events, which are converted back into analog signals in the dendrites (inputs) of the neuron. Information is encoded by patterns of activity occurring over populations of neurons, and the synapses (a connection to the subsequent neurons) can adapt their function depending on the pulses they receive, providing signal transmission energy-efficiency, and flexibility to store and recall information. SNNs can be directly applied to pattern recognition and sensor data fusion, relying on the principle that amplitude-domain, time-domain, and frequency domain features can be encoded into unique spatial- and temporal-coded spike sequences. The generation of these sequences relies on the use of one or more segments of spiking neurons.

The presently known methods for mapping SNNs onto a hardware substrate do not allow for great flexibility regarding e.g. the number of neurons used for a particular function within the SNN, the connectivity via the synapses, and the configuration of these neurons and synapses.

Furthermore, although the elementary operations required by an SNN are very efficiently realized by analog electronic circuitry, fabrication mismatch induces distortions in their functional properties. See M.J.M. Pelgrom, A.C.J. Duinmaijer, A.P.G. Welbers, "Matching properties of MOS transistors," IEEE Journal of Solid-State Circuits, vol. 24, no. 5, pp. 1433-1439, 1989. Especially at smaller process geometries, and lower operating currents, these circuits are increasingly susceptible to quantum effects and external noise, which effectively reduces signal-to-noise ratio and limits processing performance. See K.L. Shepard, V. Narayanan, "Noise in deep submicron digital design," IEEE International Conference on Computer-Aided Design, pp.524-531, 1997.

The impact of these non-idealities is increased in the case of large arrays where the driver, biasing, and neurons and synapse are shared by a greater number of devices, over longer interconnects.

SUMMARY

The neuro-synaptic segment disclosed in the present invention is organized as repeating arrays of synaptic circuits and neuron units. The present invention encompasses modalities of how these arrays are partitioned and mapped to segments, and we describe the methods and mechanisms on which the neurosynaptic array and accompanying connections can be reconfigured and segmented, subsequently offering greater flexibility in mapping SNNs onto hardware substrate. The mapping methodology incorporates a constraint driven partitioning and mapping of segments (in terms of the size of each segment (the number of neurons), their connectivity (topology and number of synapses), and their configuration (weights and number of layers)), where the chosen definition and bounded constraint is a performance metric linked with the designated function of the network of segments. This approach, detailed in the remainder of this disclosure, results in an effective means for realizing large networks of spiking neurons capable of pattern recognition of complex sensory signals.

According to a first aspect of the disclosure, a neurosynaptic array comprising a plurality of spiking neurons, and a plurality of synaptic elements interconnecting the spiking neurons to form a spiking neural network at least partly implemented in hardware is disclosed. Each synaptic element is arranged to receive a synaptic input signal from at least one of a multiple of inputs and is adapted to apply a weight to the synaptic input signal to generate a synaptic output signal, the synaptic elements being configurable to adjust the weight applied by each synaptic element. Furthermore, each of the spiking neurons is arranged to receive one or more of the synaptic output signals from one or more of the synaptic elements, and is adapted to generate a spatio-temporal spike train output signal in response to the received one or more synaptic output signals.

The neurosynaptic array comprises weight blocks and output blocks, each weight block comprising one or more of the synaptic elements, and each output block comprising one or more of the neurons and a neuron switching circuit. Each output block is electrically connectable to a subset of weight blocks via the neuron switching circuit and wherein the neuron switching circuit is configured to selectively electrically connect at least one synaptic element comprised within the subset of weight blocks to at least one neuron comprised within the respective output block, to obtain a partitioning of the neurosynaptic array into sets of neurons electrically connected to selected synaptic elements.

According to an embodiment of the first aspect of the disclosure, the subset of weight blocks to which an output block is electrically connected forms one or multiple columns within the array of synaptic elements and/or wherein the synaptic elements comprised in a particular weight block are provided within the same row of the neurosynaptic array and/or wherein each output block is connected to a column of weight blocks.

According to an embodiment of the first aspect of the disclosure, each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

According to an embodiment of the first aspect of the disclosure, the neuron switching circuit is configured to reconfigure the switching signal paths dynamically, preferably wherein the dynamic reconfiguration is based on a mapping methodology incorporating a constraint driven partitioning and segmentation of the neurosynaptic array, preferably wherein the segmentation is based on matching of the weight block and output block size to an input signal-to-noise ratio.

According to an embodiment of the first aspect of the disclosure, the segmentation of the neurosynaptic array is performed based on one or more learning rules, learning rates and/or (post-)plasticity mechanisms such that at least two of the neurosynaptic subarrays are distinct in terms of on the one or more learning rules, learning rates and/or (post-)plasticity mechanisms.

According to an embodiment of the first aspect of the disclosure, at least one of the weight blocks is organized as an interleaved structure, such as to facilitate the switching and/or combining of synaptic elements within the neurosynaptic array, and/or wherein for each output block the switching is independently controllable, such as to obtain a higher mapping flexibility, and/or wherein at least one of the output blocks are organized as an interleaved structure and/or wherein the neuron output of any of the output blocks is broadcasted to one or multiple neurosynaptic subarrays.

According to an embodiment of the first aspect of the disclosure, each of the neurons within one of the output blocks conducts passively as graded analog changes in electrical potential.

According to an embodiment of the first aspect of the disclosure, the neurosynaptic array is segmented into neurosynaptic subarrays which are separable and have their own requisite circuity, and/or are arranged to process, and be optimized for, a single modality.

According to an embodiment of the first aspect of the disclosure, both long-range and short-range interconnections exist between neurons of different neurosynaptic subarrays, and wherein denser connectivity exists in between proximal neurosynaptic subarrays than between more distant neurosynaptic subarrays.

According to an embodiment of the first aspect of the disclosure, at least one of the output blocks is controllable in that the accumulation period and/or the integration constant of a particular neuron within the at least one of the output blocks is controllable via control signals.

According to an embodiment of the first aspect of the disclosure, a neuron membrane potential of one of the neurons is implemented in the analog domain as a voltage across a capacitor or as a multibit variable stored in digital latches; or in the digital domain using CMOS logic circuits.

According to a second aspect of the present disclosure, a spiking neural processor is disclosed. The spiking neural processor comprises a data-to-spike encoder that encodes digital or analog data into spikes, a neurosynaptic array according to the first aspect of the disclosure, arranged to take the spikes outputted by the data-to spike encoder as input and arranged to output a spatio-temporal spike train as a result of the input, and a spike decoder arranged to decode the spatio-temporal spike trains originating from the neurosynaptic array.

According to a third aspect of the present disclosure, a method for configuring a neurosynaptic array is disclosed. The neurosynaptic array comprises a plurality of spiking neurons, and a plurality of synaptic elements interconnecting the spiking neurons to form the network at least partly implemented in hardware. Each synaptic element is adapted to receive a synaptic input signal from at least one of a multiple of inputs and apply a weight to the synaptic input signal to generate a synaptic output signal, the synaptic elements being configurable to adjust the weight applied by each synaptic element. Furthermore, each of the spiking neurons is adapted to receive one or more of the synaptic output signals from one or more of the synaptic elements, and generate a spatio-temporal spike train output signal in response to the received one or more synaptic output signals.

The method comprises dividing the neurosynaptic array into weight blocks and output blocks, each weight block comprising one or more of the synaptic elements, and each output block comprising one or more of the neurons and a neuron switching circuit, making each output block electrically connectable to a subset of weight blocks via the neuron switching circuit, and configuring the neuron switching circuit to selectively electrically connect at least one synaptic element comprised within the subset of weight blocks to at least one neuron comprised within the respective output block, to obtain a partitioning of the neurosynaptic array into sets of neurons electrically connected to selected synaptic elements.

According to an embodiment of the third aspect of the disclosure, the subset of weight blocks to which an output block is electrically connected forms one or more multiple columns within the array of synaptic elements and/or wherein the synaptic elements comprised in a particular weight block are provided within the same row of the neurosynaptic array.

According to an embodiment of the third aspect of the disclosure, each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

BRIEF DESCRIPTION OF DRAWINGS

Embodiments will now be described, by way of example only, with reference to the accompanying schematic drawings in which corresponding reference symbols indicate corresponding parts, and in which:

FIG. 1 shows a schematic representation of a square neurosynaptic array with $n^2$ synapses;
FIGS. 2A-C show schematic representations of organization of the reconfigurable neurosynaptic array: in FIG. 2A the primary organizational units are weight blocks $W_{i,j}$ and output blocks $O_j$ that collect m weights and m neurons, respectively, in FIG. 2B the structure of weight block $W_{i,j}$ is shown, in FIG. 2C the structure of an output block $O_j$ is shown;
FIG. 2D shows an exemplary embodiment of possible configurations of a neuron switching circuit in a column/neuron decoder;
FIG. 3 schematically shows how to divide an exemplary reconfigurable array (as e.g. shown in FIG. 2) into multiple segments/subarrays;
FIGS. 4A-D schematically show an exemplary organization of the reconfigurable neuro-synaptic array:

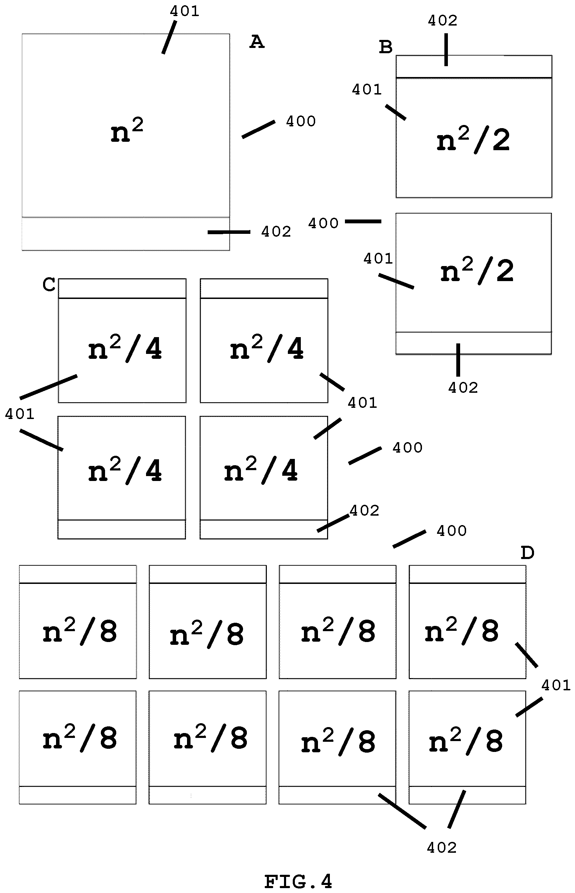

in FIG. 4A $n^2$ synapses and n neurons, in FIG. 4B dividing the array in FIG. 4A into two segments, each with $n^2/2$ synapses and $2 \times n$ neurons, in FIG. 4C dividing an array into four segments, each with $n^2/4$ synapses and $4 \times n$ neurons, and in FIG. 4D dividing an array into eight segments, each with $n^2/8$ synapses and $8 \times n$ neurons;

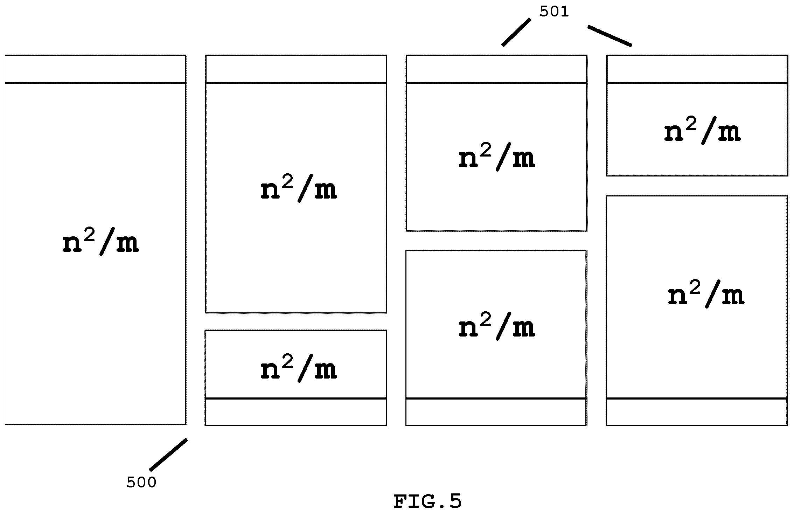

FIG. 5 shows an exemplary representation of an organization of the reconfigurable neuro-synaptic array: each of the segments (subarrays) can have a different synaptic count per neuron;

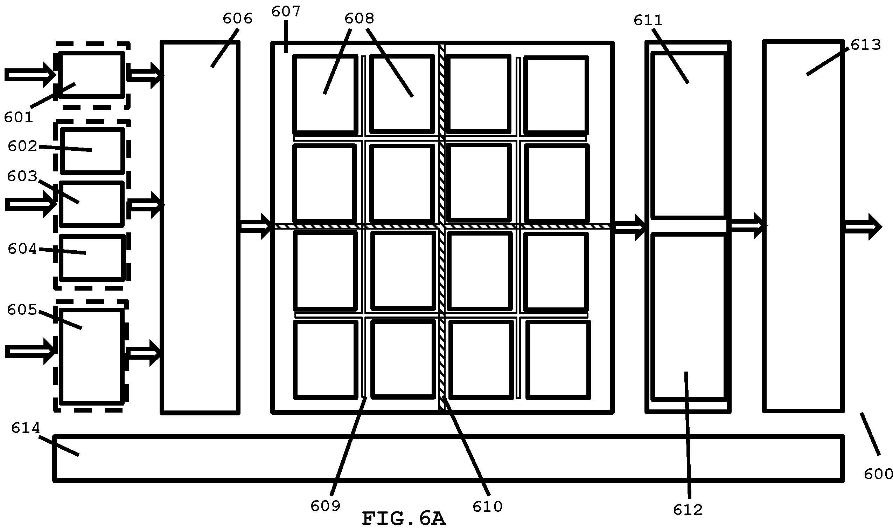

FIG. 6A show an exemplary representation of a spiking neural processor incorporating data-to-spike encoders, multi-segmented analog/mixed-signal neurosynaptic array, and spike decoders;

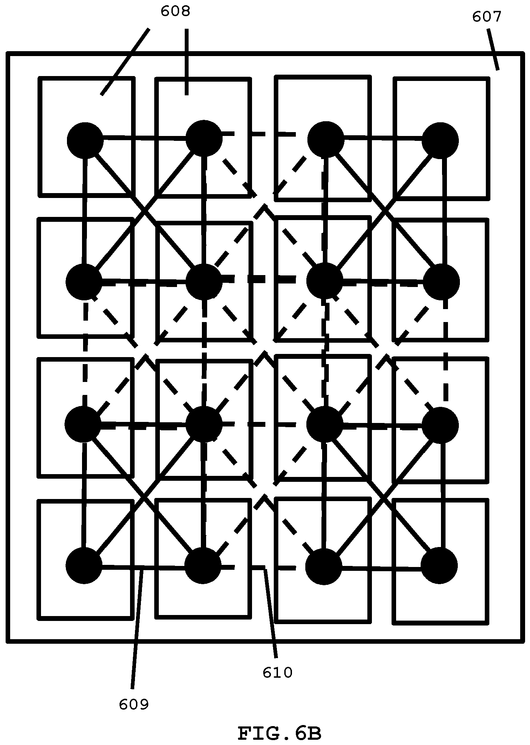

FIG. 6B shows an exemplary representation of an interconnect structure.

The figures are meant for illustrative purposes only, and do not serve as restriction of the scope or the protection as laid down by the claims.

DESCRIPTION OF EMBODIMENTS

Hereinafter, certain embodiments will be described in further detail. It should be appreciated, however, that these embodiments may not be construed as limiting the scope of protection for the present disclosure.

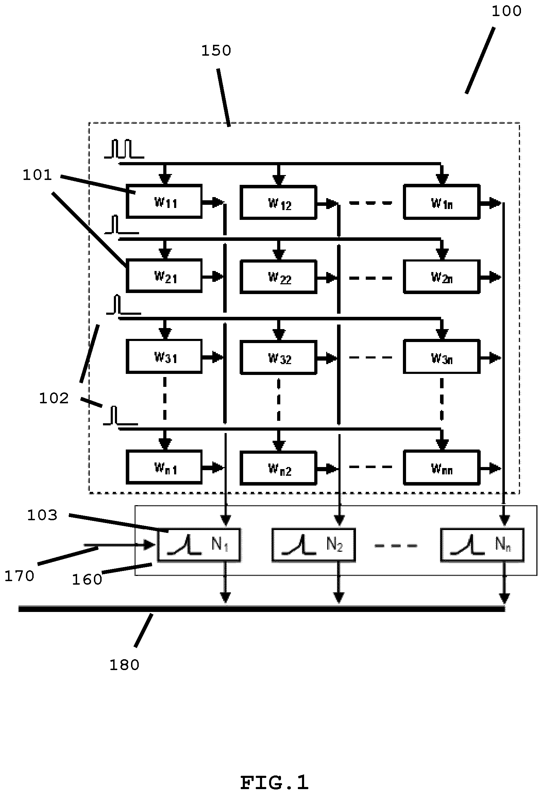

FIG. 1 shows a schematic representation of a square neurosynaptic array 100 with $n^2$ synapses and $n$ neurons. The neurosynaptic array 100 comprises a synapse matrix 150 with synapses 101 and a neuron row 160 with neurons 103. The synapses and neurons can be partly of fully implemented in hardware.

Each of the synapses 101 in the synapse matrix 150 has a certain weight $w_{i,j}$ attributed to it, where $i$ denotes the $i$th row of the synapse matrix 150, and $j$ denotes the $j$th column of the synapse matrix 150. Each row of the synapse matrix 150 is driven by a respective input 102. The input 102 is an electrical signal and can be e.g. a voltage or current spike(train). Each column $j$ of the synapse matrix 150 drives a respective output neuron 103 denoted $N_j$.

Each of the weights $w_{i,j}$ denote the strength or amplitude of the connection between the respective input 102 to the ith row of the synapse matrix 150 and the neuron $N_j$ connected to the jth column of the synapse matrix 150. In other words, if the weight $w_{i,j}$ increases, the connection is strengthened between the respective input 102 to the ith row and the neuron $N_j$ connected to the jth column of the synapse matrix 150.

When the membrane potential of a particular neuron $N_j$, which is related to the neuron's membrane electrical charge, reaches a specific value (called the 'threshold') the neuron fires. This electrical signal is represented either as a voltage or current spike and is send to another part of the SNN via a spike out line 180.

The neuron row 160 can be controlled in that e.g. the accumulation period and/or the integration constant of a particular neuron(s) 103 can be controlled via control signals 170 (although only one control signals 170 is shown, there may be one or more separate control signals for each neuron). In this way, the reaction of the neurons 103 to the signals from the synapse matrix 150 can be controlled.

This square neurosynaptic array is an example of a spiking neural network hardware such as the one described in US 63/107,498, which utilizes configurable arrays of spiking neurons, synapses, connected using a programmable interconnect structure that facilitates the implementation of any arbitrary connection topology. There, an efficient neurosynaptic array was described using distributed components that is composed of $n$ inputs driving $n^2$ synapses and $n$ neurons, i.e. the system incorporates the presence of electronic synapses at the junctions of the array, while the periphery of the array includes rows of the neuron circuits, which mimic the action of the soma and axon hillock of biological neurons.

Such an array can be partitioned and mapped onto an array of segments, each of which contains a programmable network of spiking neurons.

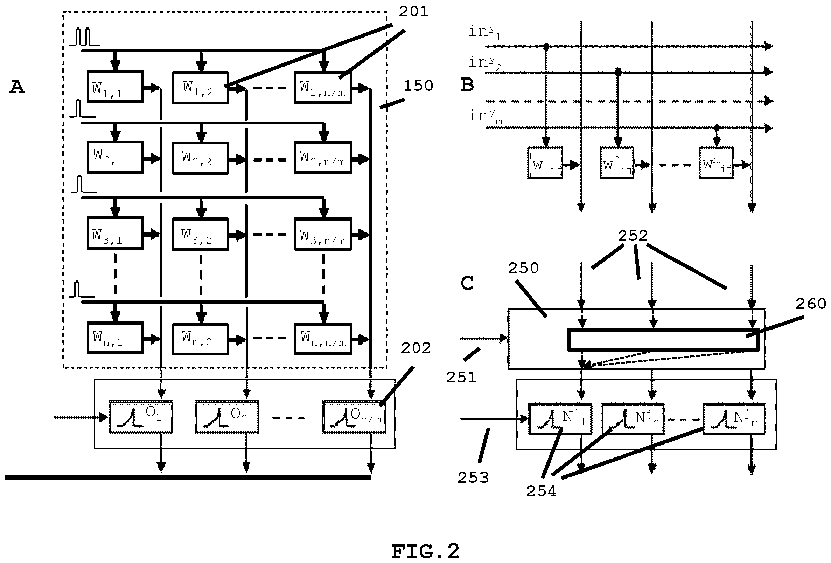

FIGS. 2A-C show schematic representations of organization of the reconfigurable neurosynaptic array comprising $n^2$ synaptic elements and $n$ neurons. In FIG. 2A the primary organizational units are weight blocks 201 and output blocks 202 that collect $1 \times m$ synaptic elements and $m$ neurons, respectively.

Fig. 2B shows a single weight block 201 with input lines. To support a larger fan-in, the synaptic outputs of multiple synaptic elements spread over multiple synapse columns can be directed into a single neuron, effectively increasing the potential fan-in of a neuron to $n \times m$ unique inputs. This is achieved by collecting synapses into weight blocks. The organization of the reconfigurable neurosynaptic array describes a space of possible architectures controlled by the number m of synaptic elements within a weight block, with $m \in [1, n]$, where maximum fan-in to a neuron is $n \times m$, number of input ports is $n \times m$, and number of neurons broadcast to via a single input spike is $n/m$. Increasing the number of $W_{n,n/m}$ weight blocks provides higher synapse utilization when an input is not shared among all mapped neurons.

The number of synapse columns (columns of synaptic elements) in a weight block 201 is thus equal to $m$ as shown in Fig. 2B, and $n/m$ is the total number of weight blocks 201 in each row of the neurosynaptic array 150, with $n$ the total number of columns in the synapse matrix 150 (assuming a square array). A weight block can comprise multiple rows of synaptic elements as well as multiple columns of synaptic elements, however the number of rows in each weight block 201 is 1 in this example. Each weight block is indicated as $W_{ij}$ with $i \in [1, n]$ and $j \in [1, n/m]$.

Note that although Fig. 2A depicts a single input line for each row of weight blocks 201 for simplicity, each row of weight blocks 201 actually receives multiple inputs, e.g. a weight block 201 comprising $m$ synaptic elements may have $m$ inputs as shown in Fig. 2B, so that the weight blocks 201 in each row are connected to $m$ input lines. Similarly, Fig. 2A depicts a single line for transmitting the outputs of each column of weight blocks 201 for simplicity. However, each column of weight blocks 201 actually generates multiple outputs, e.g. a weight block 201 comprising $m$ synaptic elements may generate $m$ outputs as shown in Fig. 2B, so that the weight blocks 201 in each column are connected to $m$ output lines.

Fig. 2C shows a single output block 202. The number of neurons in each output block 202 driven by a column of the weight blocks 201 is $m$. Each output block is indicated as $O_i$ with $i \in [1, n/m]$.

The square reconfigurable neurosynaptic array can thus be divided into $n/m$ output blocks of size $m$, where $m \leq n$. A separable neurosynaptic array is thus formed that has n unique input ports and $n/m$ output blocks comprising m neurons.

The total number of unique inputs is thereby increased and may be used either to increase the fan-in to individual neurons and/or in order to provide more granularity in spike distribution. Feedback connections are gracefully scaled with the array for efficient mapping of recurrent and multi-layer networks. The number of weight blocks $n/m$ per row thus designates internal partitioning of the $n^2$ neurosynaptic array; collectively, the number of unique inputs is increased to $n \times m$. If $m = n$, each synapse has its own dedicated input port, while for $m = 1$, the original $n^2$ array is obtained, hence an input is shared across all neurons.

In FIG. 2B the structure of a single weight block $W_{i,j}$ is represented for the organization of the reconfigurable neurosynaptic array.

Each of $W_{n,n/m}$ weight blocks follow the array organization, i.e. a set of $m$ inputs, denoted $in^i$ with $i \in [1, n]$, is broadcast along a row of weight blocks, that is a single input $in^i_x$ with $x \in [1, m]$ is distributed to $n/m$ neurons directly.

The $x$th synaptic element (with $x \in [1, m]$) of weight block $W_{i,j}$ (with $i \in [1, n]$ and $j \in [1, n/m]$) is denoted as $w^x_{i,j}$. A set of $m$ inputs, denoted $in^i$ with $i \in [1, n]$, is broadcast along the ith row of synaptic elements; that is, a single input $in^i_x$ with $x \in [1, m]$ in the set of m inputs is distributed to $n/m$ neurons.

In FIG. 2C the structure of an output block $O_j$ is shown for the organization of the reconfigurable neurosynaptic array.

A column of weight blocks 201 comprises multiple synapse columns connectable to an output block 202 and passes the outputs 252 from the synapse columns into a column/neuron decoder 250. The column/neuron decoder 250 includes a switching circuit 260 for connecting the synapse column outputs 252 to one or more sets of neurons 254 of the output block 202, the switching circuit 260 controlled by one or more select signals 251.

The switched signal that comes out of the column/neuron decoder 250 has been switched to one or more neurons 254 denoted by $N_x^j$ with $x \in [1, m]$ for the output block $O_j$ with $j \in [1, n/m]$, enabling connection of the synapse column outputs 252 to different combinations of neurons or sets of neurons.

The select signal 251 may be used to select how the column/neuron decoder 250 switches the synapse column outputs 252 from one set of neurons 254 to another set of neurons 254 of the output block 202. One or more neuron control signals 253 may be used to determine the operating properties of the neuron sets 254, or of individual neurons.

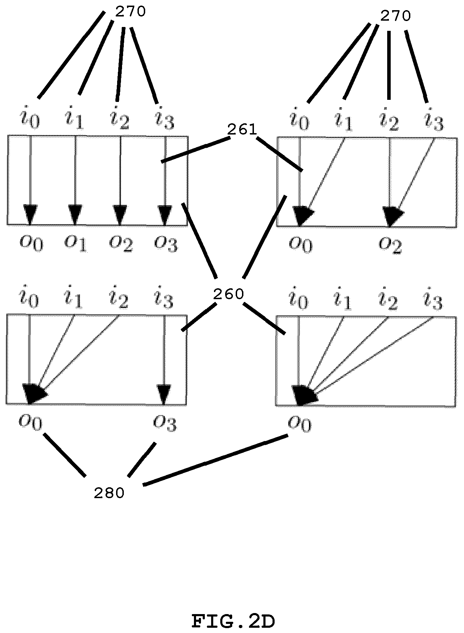

In FIG. 2D an exemplary embodiment is shown of possible configurations of the neuron switching circuit 260 in the column/neuron decoder 250 when four synapse columns 270 serve as input to the column/neuron decoder 250. In this example, the column/neuron decoder 250 is arranged to provide each group of four adjacent synapse columns 270 with four possible output neuron configurations 280 as shown, i.e. the four synapse columns may have their outputs selectively directed to four different sets of neurons 254 of the output block 202. The column/neuron decoder 250 can be connected with different numbers of synapse columns 270 and output neurons 254, and the number of synapse columns and output neurons can be different, and the number and arrangement of output neuron configurations 280 can be different.

The four configurations 280 of the neuron switching circuit 260 are discussed next. In a first configuration, the four synapse columns 270 serve as respective input to four output neurons via switching signal paths 261. In a second configuration, two pairs out of the four synapse columns 270 serve as input to two sets of output neurons via switching signal paths 261, i.e. synapse columns $i_0$ and $i_1$ serve output neuron $o_0$ and synapse columns $i_2$ and $i_3$ serve output neuron $o_2$. In a third configuration, three synapse columns $i_0$, $i_1$ and $i_2$ serve one output neuron set $o_0$, and the remaining synapse column $i_3$ serves output neuron $o_3$ via switching signal paths 261. In the fourth configuration, all four synapse columns serve a single output neuron set $o_0$ via switching signal paths 261.

The switching signal paths 261 may comprise conducting paths implemented in the logic circuit of the switching circuit 260, and they can be switched between different configurations in a particular implementation by e.g. configurable or fixed transistor gates. The particular connection of the switching signal paths 261 can be set at the initial manufacture of the neurosynaptic array, e.g. in the factory, and/or can be set on the fly via programming or other configuration of the column/neuron decoder 250 and/or neuron switching circuit 260. The neuron switching circuit 260 can e.g. reconfigure the switching signal paths 261 dynamically during operation of the neurosynaptic array. As mentioned, one or more select signals 251 can be used to select how the column/neuron decoder 250 switches from one set of neurons 254 to another set of neurons 254. The dynamic reconfiguration can be based on a certain mapping methodology incorporating a constraint driven partitioning and mapping of segments, of which exemplary embodiments will be described further below. For example, the dynamic reconfiguration can be done based on the signal-to-noise ratio $S/N$ of a particular segment in the neurosynaptic array. This will be explained further below.

The neuron switching circuit 260 thus determines which synapse columns 270 send outputs to which output neuron sets 280. In other words, the neuron switching circuit 260 thus implements - as a result of the currently active configuration of the neuron switching circuit 260 - a particular segmentation of the neurosynaptic array.

To support larger fan-in, the weight blocks $W_{n,n/m}$ can be organized as an interleaved structure to facilitate the switching/combining of $m$ adjacent synapse columns. The configuration for each set of $n/m$ neuron switches can be independently controlled for more mapping flexibility. For latency-sensitive routing of recurrent spikes or inter-layer connections, several options can be considered, for example offering a direct path between output neuron i and selected inputs, utilizing interleaved organization of neuron groups or sets, such that an input can be quickly routed to any group, providing flexible injection of spikes into the array, where the neuron output can be broadcast to individual or multiple groups automatically.

Segmenting the array enables uniformity in terms of robustness and reliability of the performance, i.e. segmentation allows (i) a robust power distribution (vertical wide metal busses (for lower resistance) can be placed at the synapse row boundaries to alleviate IR drop concerns), (ii) if an interface for access to weight retention circuits requires a clock, segmentation creates hierarchy needed for a clock rebuffing strategy, (iii) segmentation improves signal integrity - instead of a single pre-synapse with large drive strength, segmentation allows for a distributed approach, since signals can be rebuffed/amplified after each segment, (iv) segmentation increases observability within the array and simplifies verification processes.

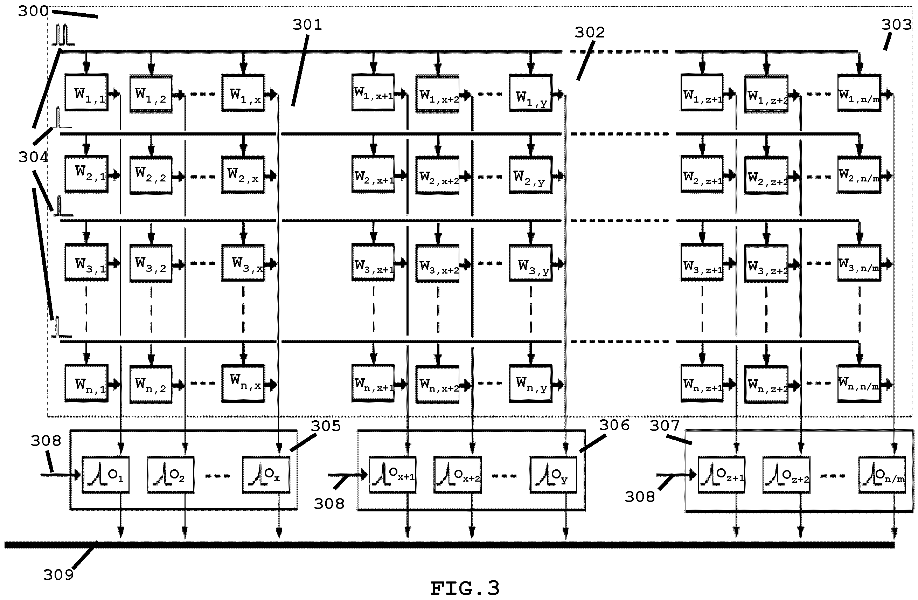

FIG. 3 schematically shows how to divide an exemplary reconfigurable array (as e.g. shown in FIG. 2) into multiple segments/subarrays.

A first subarray 301 comprises weight blocks $W_{ij}$ with $i \in [1, n]$ and $j \in [1, x]$. A second subarray 302 comprises weight blocks $W_{ij}$ with $i \in [1, n]$ and $j \in [x + 1, y]$. A final subarray 303 comprises weight blocks $W_{ij}$ with $i \in [1, n]$ and $j \in [z + 1, n/m]$. Here, $x, y, z$ are natural numbers and $x \leq y \leq z \leq n/m$. More subarrays can exist. A number of $n$ input lines 304 feed the different weight blocks. Each of the weight blocks $W_{i,j}$ is connected to an output block $O_j$. Each subarray can comprise a number of output blocks segmented as output blocks 305, 306, 307 of subarrays 301, 302, 303 respectively. When the membrane potential of a particular neuron $N_j$ (which is related to the neuron's membrane electrical charge) reaches a specific value, the neuron fires. This electrical signal is represented either as a voltage or current spike and is send to another part of the SNN via a spike out line 309.

Each of the output blocks can be controlled in that e.g. the accumulation period and/or the integration constant of a particular neuron(s) can be controlled via control signals 308. In this way, the reaction of the neurons to the signals from the weight blocks in the subarrays 301, 302, 303 can be controlled.

As mentioned before, the elementary operations required by an SNN are very efficiently realized by analog electronic circuitry, however, fabrication mismatch induces distortions in their functional properties. Especially at smaller process geometries, and lower operating currents, these circuits are increasingly susceptible to quantum effects and external noise, which effectively reduces signal-to-noise ratio and limits processing performance. The impact of these non-idealities is increased in the case of large arrays where the driver, biasing, and neurons and synapse are shared by a greater number of devices, over longer interconnects. Partitioning large arrays into smaller segments (subarrays), each with their own requisite circuitry, enables performance uniformity and mitigates these non-idealities if the mapping methodology incorporates a constraint driven partitioning and mapping of segments.

In an embodiment, the segments could be organized based on characteristics of the target signal processing function (for example gain, filtering, multiplication, addition), or frequency/time constants of operation.

In another embodiment, different regions/segments of the neurosynaptic array can be configured based on target application case, number of channels in pre-processing signal chain/path, frequency band of interest, complexity and characteristics of the feature set, or target signal-to-noise ratio of the system.

In another embodiment, segments could be organized based on bio-physically/chemically-inspired definitions (for example spatio-temporal (long- and short-term) evaluation, aging artifacts, brain communication costs and regions/layers).

In another embodiment, segments can be defined based on learning rule, learning rate and associated cost-based mechanism or (post-) plasticity mechanisms, or based on predefined Figure of Merit performance-based definitions.

In another embodiment, segments within neurosynaptic array could be configured based on homeostatic regulation (local and global) requirements, or error propagation/calibration capabilities and mechanism limitations, or limiting mechanism such as excitatory/inhibitory ratio, cross-talk, or network saturation mechanism.

FIGS. 4A-D schematically show an exemplary organization of the reconfigurable neuro-synaptic array 400: in FIG. 4A $n^2$ synapses 401 and n neurons 402, in FIG. 4B dividing the array 400 in FIG. 4A into two segments, each with $n^2/2$ synapses and $2 \times n$ neurons, in FIG. 4C dividing an array 400 into four segments, each with $n^2/4$ synapses 401 and $4 \times n$ neurons 402, and in FIG. 4D dividing an array 400 into eight segments, each with $n^2/8$ synapses 401 and $8 \times n$ neurons 402.

The neurosynaptic segments can be composed of n inputs driving $n^2$ synapses and n neurons (as in FIG. 1-3, FIG. 4A). By reducing dendritic/array distances, complexes and compartments shorten delays and lower noise, i.e. to reduce power consumption and increase neuron count per synaptic connection for the same area, the array in FIG. 4A can be subdivided into two segments (FIG. 4B), each with $n^2/2$ synapses and n neurons; hence, the total synaptic account across two segments remains the same, while the number of neurons doubles. Similarly, dividing the array in FIG. 4A into four segments (FIG. 4C), each with $n^2/4$ synapses can quadruple total neuron count, or into eight segments (FIG. 4D), each with $n^2/8$ synapses can increase neuron count by eight times, respectively.

An array's information capacity depends on signal (S) to noise (N) ratio S/N and increases as $\log_2 (1 + S/N)$. However, the energy cost of passing the signal through the array increases as $\sqrt{S/N}$. Thus, as $\sqrt{S/N}$ increases, the array's efficiency falls, i.e. all components try to transmit the same signal, although information per unit fixed cost rises. An optimum occurs where these two competing tendencies balance. Consequently, a higher ratio of fixed cost to signalling cost gives a larger optimum array.

The optimum array size also depends on the costs in other parts of the circuit in view of distributing allocated S/N among the components to maximize performance across the entire system.

FIG. 5 shows an exemplary representation of an organization of the reconfigurable neuro-synaptic array 500: each of the segments (subarrays) 501 can have a different synaptic count per neuron. On a segment 501 level, to benefit from increased accuracy of sensor outputs and/or increased discriminating feature selection and extraction capabilities, specialized segments, each devoted to processing a single modality, can be defined.

Each of the segments can have a different synaptic count per neuron, where m = [1,.n], defined according to the description of this invention.

The S/N of an input profoundly affects the array's optimum size since input noise imposes a boundary to be approached by the array's S/N. This reduces the efficacy of a large array at low input S/N and the size of the most efficient array, i.e. because an input with low S/N contains less information, and a smaller array has a lower information capacity, the optimum array matches its capacity to its input. The matching of array size to input S/N

follows the principle of symmorphosis, to match capacities within a system in order to obtain an optimal solution. See E.R. Weibel, "Symmorphosis: On form and function in shaping life," Cambridge, MA: Harvard University Press, 2000.

To economize on neuron numbers (but prevent one component from doing multiple tasks sub-optimally) within a segment, computation capabilities of circuit(s) within a neuron should be enhanced, i.e. devote more neuroreceptors (AMPA, NMDA, GABA) or neuron conductance-based (Na, Ca, K) definitions to the particular modality of the neuron and thus, improve the sensitivity and signal-to-noise ratio of the neurons. Such neurons could use internal (neuroreceptors or conductance-based) circuits to perform functions, which usually require a circuit of several neurons.

A neuromodulator can be broadcasted widely yet still act locally and specifically, affecting only neurons with an appropriate neuroreceptor. A neuromodulator's reach is further enhanced because its receptor diversifies into multiple subtypes that couple to different intra-segment signalling networks. Consequently, a small, targeted adjustment can retune and reconfigure a whole network, allowing efficient processing modularity, and task rescheduling if other signal processing functionality is required. Neuroreceptors alter the voltage dependence of currents, and subsequently affect the shape of the activation and inactivation curves.

Each receptor represents a multi-(trans)conductance channel, which models associated nonlinear characteristics. NMDA receptors can provide activity-dependent modifications of synaptic weight, while AMPA receptors can enable a fast synaptic current to drive the soma. Fast receptor modifications can act as a control mechanism for activity-dependent changes in synaptic efficacy. If groups of dendritic spikes (bursts) are sufficient to exceed the threshold of a particular neuron, the axon will generate action potentials; ensuing spike is fed-back into the dendrite, and together with soma signals multiplied and added to NMDA receptor signals to, subsequently, generate the weight control.

In general, the feedback signals can be a subset of those available and may act on a subset of the systems parameters (i.e. preserving specific intrinsic properties when perturbations are compensated). See T. O'Leary, A.H. Wiliams, A. France, E. Marder, "Cell types, network homeostasis, and pathological compensation from a biologically plausible ion channel expression model," Neuron, vol. 82, pp. 809-821, 2014.

When network perturbations occur, neuronal computational elements generate a spike based on the perturbation's sign, intensity and phase. If a resonance response of a neuronal cluster is distorted or altered, each neuron adjusts the phases of spiking. Subsequently, neuronal computation elements can perform time-dependent computations.

At sufficiently high levels of heterogeneity (e.g. increased heterogeneities in neurosynaptic parameters like integrator capacitance, firing threshold, refractory period), the network demonstrates a spatially disordered pattern of neural activity. If network activity profiles are narrow, the need for homogeneity in the distribution of spatial stimuli encoded by the network is increased.

FIG. 6A show an exemplary representation of a spiking neural processor 600 incorporating one or more data-to-spike encoders 606, multi-segmented analog/mixed-signal neurosynaptic array 607, and spike decoders 611.

Data is used as input for input modules such as an AER 601, interfaces such as e.g. an SPI 602, I2C 603 and/or I/O (input/output) 604 and/or a pre-processor DSP/CPU 605. The output of these input modules is send to one or more data-to-spike encoders 606. The one or more data-to-spike encoders 606 encode the data into spikes that are used as input for the analog/mixed-signal neurosynaptic array 607.

The spikes that are outputted by the neurosynaptic array 607 can be decoded by a spike decoder 611. A pattern lookup module 612 can be used to interpret particular patterns within the spike output signal. The decoded spikes can then be send to one or more output interfaces and/or interrupt logic 613. A configuration and control module 614 allows for configuration and control of the different parts of the spiking neural processor, e.g. setting weights and configuration parameters of the synaptic elements and neurons within the neurosynaptic array 607.

The neurosynaptic array 607 can be segmented according to any of the above mentioned embodiments. Neurons within a particular segment can conduct passively, as graded (analog) changes in electrical potential, and hence rely solely on analogue computations, which are direct and energy efficient. The brief, sharp, energy-intensive action potentials are reserved for larger-distance signalling, i.e. the interconnect within multi-segment analog/mixed-signal neurosynaptic array follows paradigm of the biological brain, i.e. dense connectivity in/between proximal segments, and less dense between distant segments. Thus, both long-range interconnects 610 and short-range interconnects 609 can exist between the neurons within the segmented neurosynaptic array 607.

FIG. 6B shows an exemplary representation of an interconnect structure.

Again the long-range interconnect 610 and short range interconnect 609 can be present between the different segments 608 within the neurosynaptic array 607.

Such (dual) interconnect structure is governed with distinctive design objectives: for short-range communication 609 low-latency between proximal segments is prioritized (obtained with high connection density), while with long-range communication 610 high-throughput between distant segments is targeted. Although the segment-to-segment interconnect fabric can be implemented with digital CMOS logic, the neurosynaptic arrays itself can be implemented by using for example analog/mixed-signal, digital, or non-volatile memory technologies.

In its simplest form, the neuron membrane potential can be implemented in the analog domain as a voltage across a capacitor or as a multibit variable stored in digital latches. Alternatively, digital neurons can be realized using CMOS logic circuits, such as adders, multipliers, and counters. From a circuit design point of view, the synapses modulate the input spikes and transform them into a charge that consequently creates postsynaptic currents that are integrated at the membrane capacitance of the postsynaptic neuron. The implementation of silicon synapses typically follows the mixed-signal methodology.

Spatiotemporal coordination of different types of synaptic transmission is fundamental for the inference of sensory signals and associated learning performance. For strong input the network organizes itself into a dynamic state where neural firing is primarily driven by the input fluctuations, resembling an asynchronous-irregular state, i.e. temporal and pairwise spike count cross-correlations approach zero. Heterosynaptic depression among all input synapses generates stable activity sequences within network.

The neurons generate time-locked patterns; due to the interaction between conductance delay (and plasticity rules), the network utilize a set of neuronal groups/segments, which form reproducible and precise firing sequences. As the conductance is increased (consequently, resulting in a net excitation to the network), the firing rates can increase and can become more uniform with a lower coefficient of variation. The network can generate spike-trains with regular timing relationships (inter-burst intervals and duty cycles) in different segments.

Entrainment of low-frequency synchronized behaviour includes a reorganization of phase so that the optimal, i.e. the most excitable, phase aligns with temporal characteristics of the events in ongoing input stimulus. The sequence of synaptic current (i.e. outward, inward) decreases temporal jitter in the generation of action potentials in individual neurons, and, consequently, creates a network with increased controllability of activity.

The large discrepancy in energy-efficiency and cognitive performance of biological nervous systems and conventional computing is profoundly exemplified with tasks related to real-time interactions with the physical surroundings, in particular in presence of uncontrolled or noisy sensory input. The neuromorphic event-based neuron network, however, due to ability to learn by example, parallelism of the operation, associative memory, multifactorial optimization, and extensibility, is an inherent choice for compact and low power cognitive systems that learn and adapt to the changes in the statistics of the complex sensory signals.

The present multi-segment reconfigurable architecture for the neuromorphic networks allows designs that offer energy-efficient solutions to applications ranging for detecting patterns of biomedical signals ( e.g. spike sorting, seizure detection, etc.), classifying images ( e.g. handwritten digits), speech commands, and can be applied in wide range of the devices, including smart sensors or wearable devices in cyber-physical systems and Internet-of-Things.

Two or more of the above embodiments may be combined in any appropriate manner.

The following clauses detail a number of aspects and/or features of the present invention.

Clauses:

> Clause 1. A neurosynaptic array comprising a plurality of spiking neurons, and a plurality of synaptic elements interconnecting the spiking neurons to form a spiking neural network at least partly implemented in hardware;
>
>> wherein each synaptic element is arranged to receive a synaptic input signal from at least one of a multiple of inputs and is adapted to apply a weight to the synaptic input signal to generate a synaptic output signal, the synaptic elements being configurable to adjust the weight applied by each synaptic element;
>> wherein each of the spiking neurons is arranged to receive one or more of the synaptic output signals from one or more of the synaptic elements, and is adapted to generate a spatio-temporal spike train output signal in response to the received one or more synaptic output signals;
>> wherein the neurosynaptic array comprises weight blocks and output blocks, each weight block comprising one or more of the synaptic elements, and each output block comprising one or more of the neurons and a neuron switching circuit;
>> wherein each output block is electrically connectable to a subset of weight blocks via the neuron switching circuit and wherein the neuron switching circuit is configured to selectively electrically connect at least one synaptic element comprised within the subset of weight blocks to at least one neuron comprised within the respective output block, to obtain a partitioning of the neurosynaptic array into sets of neurons electrically connected to selected synaptic elements.
>
> Clause 2. The neurosynaptic array of clause 1, wherein the subset of weight blocks to which an output block is electrically connected forms one or multiple columns within the array of synaptic elements and/or wherein the synaptic elements comprised in a particular weight block are provided within the same row of the neurosynaptic array and/or wherein each output block is connected to a column of weight blocks.

Clause 3. The neurosynaptic array of clause 1 or 2, wherein each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

Clause 4. The neurosynaptic array of clause 3, wherein the neuron switching circuit is configured to reconfigure the switching signal paths dynamically, preferably wherein the dynamic reconfiguration is based on a mapping methodology incorporating a constraint driven partitioning and segmentation of the neurosynaptic array, preferably wherein the segmentation is based on matching of the weight block and output block size to an input signal-to-noise ratio.

Clause 5. The neurosynaptic array of any one of the preceding clauses, wherein the segmentation of the neurosynaptic array is performed based on one or more learning rules, learning rates and/or (post-) plasticity mechanisms such that at least two of the neurosynaptic subarrays are distinct in terms of on the one or more learning rules, learning rates and/or (post-)plasticity mechanisms.

Clause 6. The neurosynaptic array of any of the preceding clauses, wherein at least one of the weight blocks is organized as an interleaved structure, such as to facilitate the switching and/or combining of synaptic elements within the neurosynaptic array, and/or wherein for each output block the switching is independently controllable, such as to obtain a higher mapping flexibility, and/or wherein at least one of the output blocks are organized as an interleaved structure and/or wherein the neuron output of any of the output blocks is broadcasted to one or multiple neurosynaptic subarrays.

Clause 7. The neurosynaptic array of any one of the preceding clauses, wherein each of the neurons within one of the output blocks conducts passively as graded analog changes in electrical potential.

Clause 8. The neurosynaptic array of any one of the preceding clauses, wherein the neurosynaptic array is segmented into neurosynaptic subarrays which are separable and have their own requisite circuity, and/or are arranged to process, and be optimized for, a single modality.

Clause 9. The neurosynaptic array of clause 8, wherein both long-range and short-range interconnections exist between neurons of different neurosynaptic subarrays, and wherein denser connectivity exists in between proximal neurosynaptic subarrays than between more distant neurosynaptic subarrays.

Clause 10. The neurosynaptic array of any one of the preceding clauses, wherein at least one of the output blocks is controllable in that the accumulation period and/or the integration constant of a particular neuron within the at least one of the output blocks is controllable via control signals.

Clause 11. The neurosynaptic array of any one of the preceding clauses, wherein a neuron membrane potential of one of the neurons is implemented in the analog domain as a voltage across a capacitor or as a multibit variable stored in digital latches; or in the digital domain using CMOS logic circuits.

Clause 12. A spiking neural processor comprising:

a data-to-spike encoder that encodes digital or analog data into spikes;
a neurosynaptic array according to any one of the preceding clauses, arranged to take the spikes outputted by the data-to spike encoder as input and arranged to output a spatio-temporal spike train as a result of the input; and
a spike decoder arranged to decode the spatio-temporal spike trains originating from the neurosynaptic array.

Clause 13. A method for configuring a neurosynaptic array, wherein:
The neurosynaptic array comprises a plurality of spiking neurons, and a plurality of synaptic elements interconnecting the spiking neurons to form the network at least partly implemented in hardware;

wherein each synaptic element is adapted to receive a synaptic input signal from at least one of a multiple of inputs and apply a weight to the synaptic input signal to generate a synaptic output signal, the synaptic elements being configurable to adjust the weight applied by each synaptic element;
wherein each of the spiking neurons is adapted to receive one or more of the synaptic output signals from one or more of the synaptic elements, and generate a spatio-temporal spike train output signal in response to the received one or more synaptic output signals;

wherein the method comprises

dividing the neurosynaptic array into weight blocks and output blocks, each weight block comprising one or more of the synaptic elements, and each output block comprising one or more of the neurons and a neuron switching circuit;;

making each output block electrically connectable to a subset of weight blocks via the neuron switching circuit;

configuring the neuron switching circuit to selectively electrically connect at least one synaptic element comprised within the subset of weight blocks to at least one neuron comprised within the respective output block, to obtain a partitioning of the neurosynaptic array into sets of neurons electrically connected to selected synaptic elements.

Clause 14. The method of clause 14, wherein the subset of weight blocks to which an output block is electrically connected forms one or more multiple columns within the array of synaptic elements and/or wherein the synaptic elements comprised in a particular weight block are provided within the same row of the neurosynaptic array.

Clause 15. The method of clause 13 or 14, wherein each of the neuron switching circuits comprises switching signal paths which comprise conducting wires implemented in a logic circuit of the neuron switching circuit, wherein the switching signal paths are configured to be switchable between different configurations, preferably by using transistor gates, wherein each configuration determines which at least one synaptic element comprised within the subset of weight blocks is electrically connected to which at least one neuron comprised within the output block.

**Claims**

1. A neuron switching circuit (260) for a neurosynaptic array (100), the neurosynaptic array comprising weight blocks (201) and output blocks (202), each weight block (201) comprising one or more synaptic elements, and each output block (202) comprising one or more spiking neurons; the neuron switching circuit comprising:

switching signal paths, which comprise conducting wires implemented in a logic circuit of the neuron switching circuit, wherein the switching signal paths are configured to be switchable between different configurations, wherein each configuration determines which at least one synaptic element comprised within the subset of weight blocks is electrically connected to which at least one neuron comprised within the output block;

wherein the neuron switching circuit is configured to reconfigure the switching signal paths (261) dynamically during operation of the neurosynaptic array.

2. The neuron switching circuit of claim 1, wherein the dynamic reconfiguration is based on a mapping methodology incorporating a constraint driven partitioning and segmentation of the neurosynaptic array.

3. The neuron switching circuit of claim 2, wherein the segmentation is based on matching of a weight block size and an output block size to an input signal-to-noise ratio, preferably by partitioning and segmenting the neurosynaptic array (100) into one or more segments, each segment having a signal (S) to noise (N) ratio S/N, an information capacity given by $\log_2 (1 + S/N)$ and an energy cost of passing a signal through the segment given by $\sqrt{S/N}$ , in such a way that for each segment the information capacity is balanced with the energy cost of passing a signal through the segment.

4. The neuron switching circuit of claim 2, wherein the segmentation is based on characteristics of the frequency/time constants of operation or characteristic of the target signal processing function of the neurosynaptic array, preferably gain, filtering, multiplication, or addition.

5. The neuron switching circuit of claim 2, wherein the segmentation is based on target application case, number of channels in pre-processing signal chain/path, frequency band of interest, complexity and characteristics of a feature set of the neurosynaptic array, or target signal-to-noise ratio of the neurosynaptic array.

5. The neuron switching circuit of claim 2, wherein the segmentation is based on learning rule, learning rate and associated cost-based mechanism or (post-) plasticity mechanisms, or based on predefined Figure of Merit performance-based definitions of the neurosynaptic array.

6. The neuron switching circuit of claim 2, wherein the segmentation is based on homeostatic regulation requirements, or error propagation/calibration capabilities and mechanism limitations, or limiting mechanism such as excitatory/inhibitory ratio, cross-talk, or a saturation mechanism.

**7.** The neuron switching circuit of any one of the preceding claims, wherein the neuron switching circuit (260) is configured to selectively electrically connect at least one synaptic element comprised within the subset of weight blocks (201) to at least one neuron comprised within the respective output block (202), to obtain a partitioning of the neurosynaptic array (100) into sets of neurons electrically connected to selected synaptic elements.

**8.** The neuron switching circuit of any one of the preceding claims, wherein the switching signal paths are configured to be switchable between different configurations by using transistor gates, preferably configurable or fixed transistor gates.

**9.** A neurosynaptic array, comprising:

comprising a plurality of spiking neurons, and a plurality of synaptic elements interconnecting the spiking neurons to form a spiking neural network, wherein the synaptic elements and spiking neurons are partly or fully implemented in hardware;
wherein each synaptic element is arranged to receive a synaptic input signal from at least one of a multiple of inputs and is adapted to apply a weight to the synaptic input signal to generate a synaptic output signal, the synaptic elements being configurable to adjust the weight applied by each synaptic element;
wherein each of the spiking neurons is arranged to receive one or more of the synaptic output signals from one or more of the synaptic elements, and is adapted to generate a spatio-temporal spike train output signal in response to the received one or more synaptic output signals; and **characterized in that**:
the neurosynaptic array (100) comprises weight blocks (201) and output blocks (202), each weight block (201) comprising one or more of the synaptic elements, and each output block (202) comprising one or more of the neurons;
wherein each weight block is comprised in a column of weight blocks of the neurosynaptic array;
wherein each output block comprises the neuron switching circuit of any one of the preceding claims, and wherein each configuration of the switching signal paths determines which at least one synaptic element comprised within the subset of weight blocks is electrically connected to which at least one neuron comprised within the output block.

**10.** A spiking neural processor comprising:

a data-to-spike encoder that encodes digital or analog data into spikes;
a neurosynaptic array (100) according to claim 9, arranged to take the spikes outputted by the data-to spike encoder as input and arranged to output a spatio-temporal spike train as a result of the input; and
a spike decoder arranged to decode the spatio-temporal spike trains originating from the neurosynaptic array (100).

**11.** A method for configuring a neuron switching circuit, for a neurosynaptic array (100), the neurosynaptic array comprising weight blocks (201) and output blocks (202), each weight block (201) comprising one or more synaptic elements, and each output block (202) comprising one or more spiking neurons; wherein the method comprises:

electrically connecting at least one synaptic element comprised within the subset of weight blocks to at least one neuron comprised within the output block using switching signal paths which comprise conducting wires implemented in a logic circuit of the neuron switching circuit;
reconfiguring the switching signal paths (261) dynamically during operation of the neurosynaptic array, such that the switching signal paths are switchable between different configurations, wherein each configuration determines which at least one synaptic element comprised within the subset of weight blocks is electrically connected to which at least one neuron comprised within the output block.

**12.** The method of claim 11, wherein the dynamic reconfiguration is based on a mapping methodology incorporating a constraint driven partitioning and segmentation of the neurosynaptic array.

**13.** The neuron switching circuit of claim 12, wherein the segmentation is based on matching of a weight block size and an output block size to an input signal-to-noise ratio, preferably by partitioning and segmenting the neurosynaptic array (100) into one or more segments, each segment having a signal (S) to noise (N) ratio S/N, an information capacity given by $\log_2(1 + S/N)$ and an energy cost of passing a signal through the segment given by $\sqrt{S}/N$, in such a way that for each segment the information capacity is balanced with the energy cost of passing a signal through the segment.

**14.** The method of any one of claims 11-13, wherein the neuron switching circuit (260) is configured to selectively electrically connect at least one synaptic element comprised within the subset of weight blocks (201) to at least one neuron comprised within the respective output block (202), to obtain a partitioning of the neurosynaptic array (100) into sets of neurons electrically connected to selected synaptic elements.

**15.** The method of any one of claims 11-14, wherein the switching signal paths are configured to be switchable between different configurations by using transistor gates, preferably configurable or fixed transistor gates.

FIG.1

FIG.2

FIG.2D

FIG. 3

A

401

$n^2$

400

402

B

402

401

$n^2/2$

400

401

$n^2/2$

402

C

$n^2/4$

$n^2/4$

401

$n^2/4$

$n^2/4$

401

400

402

400

D

$n^2/8$

$n^2/8$

$n^2/8$

$n^2/8$

401

$n^2/8$

$n^2/8$

$n^2/8$

$n^2/8$

402

FIG.4

EP 4 535 238 A2

FIG.5

FIG. 6A

FIG.6B

## REFERENCES CITED IN THE DESCRIPTION

### Patent documents cited in the description

- US 63107498 B

### Non-patent literature cited in the description

- **M.J.M. PELGROM** ; **A.C.J. DUINMAIJER** ; **A.P.G. WELBERS**. Matching properties of MOS transistors. *IEEE Journal of Solid-State Circuits*, 1989, vol. 24 (5), 1433-1439
- **K.L. SHEPARD** ; **V. NARAYANAN**. Noise in deep submicron digital design. *IEEE International Conference on Computer-Aided Design*, 1997, 524-531
- **E.R. WEIBEL**. Symmorphosis: On form and function in shaping life. MA: Harvard University Press, 2000
- **T. O'LEARY** ; **A.H. WILIAMS** ; **A. FRANCE** ; **E. MARDER**. Cell types, network homeostasis, and pathological compensation from a biologically plausible ion channel expression model. *Neuron*, 2014, vol. 82, 809-821